# DEMANDE DE BREVET EUROPEEN

(11) **EP 3 206 199 A1**
(43) Date de publication de la demande: **16.08.2017**
(21) Numéro de dépôt: 17155632.7
(22) Date de dépôt: 10.02.2017
(51) Int. Cl.: G08G 1/0968, G08G 1/127, G08G 7/00

(54) **INFRASTRUCTURE DE SUPERVISION D'UN RÉSEAU DE TRANSPORT MULTIMODAL TERRESTRE**

(30) Priorité: 12.02.2016 FR 1651164
(71) Demandeur: ALSTOM Transport Technologies, 93400 Saint-Ouen (FR); Institut de Recherche Technologique Systemx, 91120 Palaiseau (FR)
(72) Inventeur: POISSON, Pascal, 92330 SCEAUX (FR); ABID, Manel, 75011 PARIS (FR)
(74) Mandataire: Lavoix

(57) **Abrégé**

Cette Infrastructure (10) se caractérisée en ce que, le réseau multimodal regroupant une pluralité de réseaux monomodaux, chaque réseau monomodal étant équipé d'un système d'exploitation (64) individuel, l'infrastructure de supervision comporte une pluralité de modules de supervision locale (60), chaque module de supervision locale (60) étant associé à une station de correspondance assurant une interconnexion entre au moins deux desdits réseaux monomodaux et étant propre à effectuer une synthèse, en temps réel, du trafic au niveau de la station de correspondance associée et à exécuter, en temps continu, une pluralité de règles d'exploitation en utilisant des données d'exploitation de la synthèse du trafic de manière à générer au moins une consigne, et à transmettre ladite consigne à au moins un système d'exploitation d'un réseau monomodal parmi les réseaux monomodaux interconnectés à la station de correspondance associée.

## Description

L'invention a pour domaine celui des infrastructures de supervision d'un réseau de transport multimodal terrestre.

Dans les agglomérations importantes, différents services de transport publiques sont proposés aux usagers : services de train, services de métro, services de tramway, services de bus, etc.

Ces services sont gérés indépendamment les uns des autres le plus souvent par différents exploitants.

Dans le présent document, un réseau monomodal est un réseau sur lequel circulent des véhicules relevant d'un seul mode de transport : par exemple le métro, le bus, le tram, le train. L'exploitant d'un réseau monomodal assure le service sur ce réseau monomodal sur la base d'un plan de transport, c'est-à-dire d'un plan de déserte de points d'arrêts, associé à une table horaire ou à une fréquence de passage. Un exploitant gère souvent un ensemble de réseaux monomodaux pour lesquels il n'y a pas de synchronisation effective entre eux.

De manière générale, un réseau monomodal se caractérise par l'existence d'un système d'exploitation centralisé permettant une gestion du trafic sur le réseau monomodal correspondant. Un système d'exploitation utilise des tables horaires pour commander le mouvement de chaque véhicule circulant sur le réseau monomodal. Une table horaire définit les heures de départ de chaque station d'une ligne, les temps de parcours normaux entre deux stations de la ligne, les temps d'arrêt normaux en station, etc. Une table horaire est mise à jour dynamiquement au cours du déplacement du véhicule correspondant avec des informations d'exploitation, telles que par exemple l'intervalle avec le véhicule précédent le véhicule considéré, le temps nécessaire au transfert des usagers lors d'un arrêt en station, etc.

Un réseau de transport multimodal terrestre est, par définition, un réseau qui regroupe différents réseaux monomodaux et qui permet à un usager de se rendre d'une station de départ à une station d'arrivée en utilisant un ou plusieurs services de transport en commun.

Le document FR 3 010 566 A1 divulgue un système de calcul de trajets d'un ensemble de passagers dans un réseau de transport multimodal utilisant le co-voiturage sur certains segments de parcours. Les documents GB 2 378 560 A, EP 2 637 148 A1 et US 2013/0144467 divulguent des systèmes de planification de trajets et/ou de correspondances.

Cependant, dans un tel réseau multimodal, il est difficile pour un usager de minimiser son temps de trajet entre une station de départ et une station d'arrivée de façon effective, notamment lorsque ce trajet comporte une correspondance entre deux services, c'est-à-dire une station permettant à un usager de descendre d'un premier véhicule desservant une première ligne d'un premier réseau monomodal pour monter dans un second véhicule desservant une seconde ligne d'un second réseau monomodal.

L'usager peut par exemple chercher à planifier son trajet en interrogeant une base de données agrégeant les horaires théoriques des différents services. Cependant les services étant gérés de manière indépendante, les horaires théoriques ne sont pas corrélées et peuvent conduire à une durée d'attente prolongée dans la station de correspondance.

De plus, les horaires théoriques sont difficilement respectés, de sorte qu'au cours du trajet, si le premier véhicule est en retard, le second véhicule peut avoir quitté la station de correspondance avant que le premier véhicule ne soit arrivé. En conséquence, l'usager manque sa correspondance et est obligé d'attendre le prochain véhicule desservant la seconde ligne ou de redéfinir son trajet. La fréquence des véhicules sur certaines lignes étant faible, la durée d'attente pour l'usager peut être importante.

Alors même qu'il a optimisé son trajet, l'usager est contraint à un trajet dont la durée est rallongée. La qualité de service perçue par l'usager n'est donc pas optimale.

Pour éviter ce genre de situations causées par des services de transport gérés indépendamment il y a donc un besoin pour une supervision de l'exploitation au niveau du réseau de transport multimodal.

L'invention a donc pour but de répondre à ce besoin, en proposant notamment une infrastructure de supervision d'un réseau de transport terrestre multimodal.

L'invention a pour objet une infrastructure de supervision d'un réseau de transport multimodal terrestre, caractérisée en ce que, le réseau multimodal regroupant une pluralité de réseaux monomodaux, chaque réseau monomodal étant équipé d'un système d'exploitation individuel, l'infrastructure de supervision comporte une pluralité de modules de supervision locale, chaque module de supervision locale étant associé à une station de correspondance assurant une interconnexion entre au moins deux desdits réseaux monomodaux et étant propre à effectuer une synthèse, en temps réel, du trafic au niveau de la station de correspondance associée et à exécuter, en temps continu, une pluralité de règles d'exploitation en utilisant des données d'exploitation de la synthèse du trafic de manière à générer au moins une consigne, et à transmettre ladite consigne à au moins un système d'exploitation d'un réseau monomodal parmi les réseaux monomodaux interconnectés à la station de correspondance associée.

L'infrastructure selon l'invention peut comporter une ou plusieurs des caractéristiques suivantes, prises seules ou selon toutes les combinaisons techniquement possibles :
- l'infrastructure comporte un module de supervision globale propre à transmettre à chacun des modules de supervision locale la pluralité de règles d'exploitation que ledit module de supervision locale doit exécuter.
- le module de supervision globale détermine la pluralité de règles d'exploitation que doit exécuter chacun des modules de supervision locale en fonction d'un profil d'exploitation du réseau multimodal, un profil correspondant à la mise en oeuvre d'une priorité d'exploitation du réseau multimodal.
- la priorité d'exploitation est choisie parmi : une priorité donnée au temps de trajet des usagers à travers le réseau multimodal ; une priorité donnée au flux de passagers sur le réseau multimodal ; Une priorité donnée à la consommation énergétique des véhicules circulant sur le réseau multimodal ; et d'autres priorités élaborées par l'exploitant du réseau de transport multimodal.
- l'infrastructure comporte un module de gestion des données opérationnelles propre à agréger des informations de manière à déterminer un état courant du trafic sur le réseau multimodal et à comparer l'état courant avec un état précédent de manière à identifier un évènement caractéristique indicatif de la survenue d'une surcharge sur le réseau multimodal, le module de supervision globale étant propre, en fonction dudit évènement caractéristique identifié, à déployer, sur les différents modules de supervision locale, des règles d'exploitation constituant des contremesures permettant d'éviter la survenue de ladite surcharge.
- l'infrastructure comporte une base de données de scénarios associant à une défaillance sur le réseau multimodal, une pluralité de scénarios d'exploitation du réseau multimodal, et pour chaque scénario un ensemble de règles d'exploitation, et un module de gestion de crise propre, lors de la survenue d'une défaillance particulière, à déterminer un impact attendu de chaque scénario associé à ladite défaillance sur l'état du trafic, de manière à aider un opérateur à choisir un meilleur scénario parmi les différents scénarios possibles, le module de supervision globale transmettant les règles d'exploitation associées au meilleur scénario vers chacun des modules de supervision locale.
- une règle d'exploitation consiste à retenir en station un second véhicule tant qu'un premier véhicule n'est pas arrivé en station, à condition que le temps de rétention du second véhicule ne dépasse pas une marge prédéterminée.
- une règle d'exploitation consiste à agir sur le temps de déplacement du véhicule entre stations et/ou sur la mission d'un ou plusieurs véhicules afin de maintenir la meilleure qualité de service possible.
- le module de supervision globale fonctionne dans un mode sélectionné parmi un mode de fonctionnement nominal, un mode de fonctionnement en surcharge, pour éviter la survenue d'une surcharge en un point du réseau multimodal, et un mode de fonctionnement dégradé, pour tenir compte d'une défaillance sur le réseau multimodal.

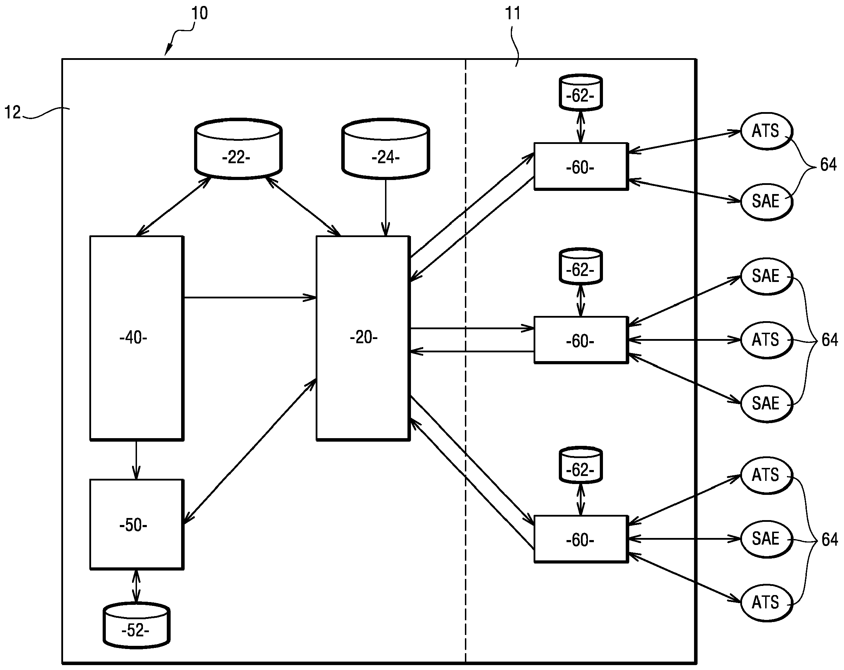

L'invention sera mieux comprise à la lecture de la description qui va suivre, donnée uniquement à titre d'exemple non limitatif et faite en se référant à la seule figure annexée qui est une représentation schématique de l'infrastructure selon l'invention.

L'infrastructure de supervision 10 de la figure a pour fonction de permettre la supervision de l'exploitation d'un réseau de transport multimodal terrestre tel que défini ci-dessus.

Le réseau multimodal regroupe une pluralité de réseaux monomodaux, chaque réseau monomodal comportant une pluralité de ligne sur lesquelles circulent des véhicules de même type.

Des stations de correspondance, communes à au moins deux lignes de deux réseaux monomodaux différents, permettent le transfert des usagers d'une ligne à l'autre.

Une station de correspondance permet ainsi à un usager d'effectuer une correspondance entre une première ligne desservie par des premiers véhicules du premier réseau monomodal et une seconde ligne desservie par des seconds véhicules du second réseau monomodal.

Chaque réseau monomodal est équipé d'un système d'exploitation classique permettant une exploitation dynamique des véhicules en circulation. Un tel système d'exploitation est propre à déterminer dynamiquement des tables horaires pour chacun des véhicules en circulation à l'instant courant, à partir notamment de données d'exploitation.

L'infrastructure de supervision 10 permet d'avoir une vision globale du trafic sur le réseau multimodal et d'optimiser l'exploitation de chacun des réseaux monomodaux en conséquence.

L'infrastructure de supervision 10 vient s'interfacer avec les systèmes d'exploitation existants des différents réseaux monomodaux, pour offrir une supervision du réseau multimodal. En particulier, l'infrastructure de supervision 10 conduit à la génération de consignes pour l'exploitation d'un réseau monomodal particulier, ces consignes étant prises en compte par le système d'exploitation du réseau monomodal considéré, en tant que données d'exploitation, pour l'élaboration des tables horaires des véhicules en circulation.

L'infrastructure de supervision 10 apporte dynamiquement à un système d'exploitation individuel des données d'exploitation extérieures au réseau monomodal considéré. Le système d'exploitation modifie en conséquence la table horaire d'un véhicule supervisé et/ou sa dynamique de déplacement (c'est-à-dire en adaptant la vitesse de circulation entre deux stations), tout en conservant la main sur l'exploitation du réseau monomodal correspondant, ne serait-ce que pour des questions de sûreté de fonctionnement.

L'infrastructure de supervision 10 comporte un premier niveau 11 et un second niveau 12.

Le premier niveau 11, décentralisé, comporte une pluralité de modules de supervision locale 60. Chaque module 60 est associé à base de données de trafic 62 comportant des données de trafic. Les différents modules 60 sont connectés les uns aux autres et avec un module de supervision globale 20 du second niveau 12, au moyen d'un réseau de communication adapté.

Le second niveau 12, centralisé, comporte un module de supervision globale 20, un module de gestion des données opérationnelles 40 et un module de gestion de crise 50.

Le second niveau 12 comporte également une base de donnée d'historique 22, une base de données de règles d'exploitation 24, et une base de données de scénarios 52.

### Premier Niveau

Le premier niveau 11 a pour fonction l'évaluation de la situation locale au niveau de chacune des stations de correspondance du réseau multimodal et la gestion du trafic local au niveau de chacune des stations de correspondance.

Chaque module de supervision locale 60 est associé à une station de correspondance du réseau multimodal.

Un module 60 est interfacé avec chacun des systèmes d'exploitation individuels 64 des réseaux monomodaux dont des lignes se croisent à la station de correspondance associée au module 60. Par exemple, comme cela est représenté sur la figure, un module 60 est interfacé avec un ou plusieurs systèmes d'exploitation ATS, pour « Automatic Train Supervision », classiques d'un réseau monomodal du type métro ou tramway, et avec un ou plusieurs systèmes d'exploitation SAE, pour « Exploitation Aided System », classiques d'un réseau monomodal du type bus.

Plus généralement, les différents réseaux monomodaux agrégés au sein du réseau multimodal doivent au moins être fondés sur l'exploitation de tables horaires dynamiques, et de préférence des tables horaires dynamiques qui peuvent être ajustées avec un temps de réponse court, typiquement de l'ordre de la seconde.

Un module 60 est propre à effectuer une synthèse du trafic local au niveau de la station de correspondance qu'il équipe, à partir d'informations qui lui sont communiquées par les systèmes d'exploitation avec lesquels il est interfacé, notamment les différentes tables horaires des véhicules en circulation, ainsi que par les autres modules 60. Les données relatives à la synthèse du trafic local sont stockées dans la base de données 62 associée au module 60 considéré.

Un module 60 met en oeuvre des mécanismes de gestion locale du trafic au niveau de la station de correspondance qu'il équipe, notamment des mécanismes de synchronisation entre les véhicules des différents réseaux monomodaux arrivant et quittant cette station de correspondance.

Pour cela, un module 60 exécute un ensemble de règles d'exploitation multimodales permettant d'élaborer au moins une consigne d'exploitation d'un réseau monomodal particulier à partir de la synthèse du trafic local.

L'ensemble des règles d'exploitation qu'un module 60 doit exécuter à l'instant courant lui est fourni par le module de supervision globale 20 en fonction d'un profil de fonctionnement du réseau multimodal comme cela sera décrit ci-dessous. C'est cet ensemble de règles qui définit les mécanismes de gestion mis en oeuvre par le module 60.

Par exemple, pour un profil de fonctionnement « nominal », un module 60 vérifie un ensemble de règles permettant une synchronisation entre deux lignes de deux réseaux multimodaux se croisant dans la station de correspondance associée au module 60 considéré.

Cet ensemble de règles consiste par exemple à retarder le départ d'un second véhicule de correspondance en utilisant la marge temporelle prévue dans le plan d'exploitation de la ligne correspondante.

Plus précisément, parmi les informations de synthèse du trafic local, le module 60 estime périodiquement le retard avec lequel un premier véhicule va arriver à la station de correspondance.

A partir de ce retard estimé le module 60 élabore une consigne consistant à retarder l'heure de départ d'un second véhicule de la station de correspondance, par rapport à l'heure de départ prévue dans la table horaire courante de ce second véhicule.

La consigne est alors transmise au système d'exploitation supervisant le déplacement du second véhicule. Le système d'exploitation met alors à jour la table horaire du second véhicule en tenant compte de la consigne, en plus des informations qu'il prend en compte classiquement pour superviser le mouvement du second véhicule.

Le second véhicule relevant du second réseau monomodal est ainsi retenu en station pour tenir compte du retard du premier véhicule relevant du premier réseau monomodal, de manière à permettre aux usagers du premier véhicule de descendre du premier véhicule et de monter dans le second véhicule.

Cependant, il ne faut pas que l'introduction d'un retard dans l'heure de départ du second véhicule engendre, en aval de la station de correspondance considérée, des perturbations trop importantes (effet d'avalanche). Ainsi, la règle d'exploitation exécutée par le module 60 permet de ne retarder le départ du second véhicule que s'il reste inférieur à une marge d'exploitation prédéterminée par l'exploitant du second réseau monomodal.

Si le module de supervision locale 60 ne peut plus retenir davantage le second véhicule alors que le premier véhicule n'est pas encore arrivé, le second véhicule part sans attendre l'arrivée du premier véhicule. Le module 60 transmet au module de supervision globale 20 le fait qu'un ensemble de règles d'exploitation n'a pas été respecté. Ce sera ensuite au module 20 d'analyser les causes de cette anomalie et éventuellement de déployer de nouvelles règles d'exploitation de manière à mieux gérer le trafic afin d'autoriser la correspondance entre les deux réseaux monomodaux au niveau de la station de correspondance considérée.

La règle d'exploitation est mise à jour dès que la valeur du retard estimé pour le premier train est modifiée par la synthèse du trafic local.

A chaque modification de la consigne sur l'heure de départ du second train, cette donnée est propagée vers les autres modules 60 pour qu'ils mettent à jour leur base de données 62 de trafic local, lorsque de telles données sont pertinentes pour les règles d'exploitation mises en oeuvre.

Dès que le second train quitte effectivement la station, le module 60 cesse de mettre à jour la consigne sur l'heure de départ corrigée du second véhicule et de transmettre cette donnée aux autres modules de supervision locale 60 et au système d'exploitation concerné.

Différents types de règles ou de groupe de règles peuvent être mises en oeuvre pour modifier dynamiquement les tables horaires, redéfinir la mission d'un véhicule, modifier la dynamique d'un véhicule entre deux stations, etc. Plus généralement, une consigne peux être générée par une règle ou un groupe de règles pour influencer n'importe lequel des paramètres que le système d'exploitation est propre à ajuster.

### Second niveau

Le second niveau 12 a pour fonction l'évaluation de la situation globale sur l'ensemble du réseau multimodal et la gestion du réseau multimodal selon un plan de transport.

Le module de supervision globale 20 est configuré pour fonctionner dans trois modes possibles.

Dans un premier mode de fonctionnement ou mode nominal, le module 20 sélectionne, automatiquement ou par l'intervention d'un opérateur, et en fonction d'une pluralité de paramètres, un profil d'exploitation du réseau multimodal.

Dans la base de données d'exploitation 24, à chaque profil sont associés les ensembles de règles d'exploitation que chacun des modules 60 doivent exécutées lorsque le profil considéré est sélectionné.

Par exemple, parmi les profils prédéfinis, on trouve un profil « heures pleine », dont les règles d'exploitation donnent une priorité aux flux d'usagers (favoriser la circulation le long d'une ligne utilisée par un grand nombre d'usagers), un profil « heures creuses », dont les règles d'exploitation permettent de donner la priorité aux stations males desservies (retarder un train ayant une fréquence faible pour permettre aux usagers d'avoir leur correspondance), ou encore un profil économie d'énergie (faire circuler un train avec un retard non pas en le retenant en station mais en limitant sa vitesse entre deux stations).

Les paramètres de sélection d'un profil comportent par exemple l'instant de la journée pour déterminer si l'on est en heures creuses ou en heures pleines, etc.

Une fois un profil sélectionné, les règles associées au profil correspondant sont lues dans la base de données 24 et transmises à chacun des modules 60 pour exécution.

Il est à noter que les règles d'exploitation sont prédéfinies dans la base de données 24. Chaque règle résulte d'une analyse d'exploitation entre les différents exploitants des réseaux monomodaux impactés par la mise en oeuvre de la règle correspondante et l'exploitant du réseau multimodal.

Dans un second mode de fonctionnement ou mode «en surcharge », le module de supervision 20 analyse l'évolution du comportement du réseau à partir d'évènements caractéristiques.

Plus précisément, le module de gestion des données opérationnelles 40 est propre à déterminer un état instantané du trafic sur le réseau multimodal. L'état instantané du trafic peut par exemple consister en une pluralité de variables, chaque variable étant associée à un niveau de charge en un point du réseau multimodal.

Pour ce faire, le module 40 collecte des données de différentes sources d'information. Ces données peuvent être des données d'exploitation délivrées par les systèmes de supervision des réseaux monomodaux, des données contextuelles d'exploitation, telles que des données météorologiques, ou encore des données de surveillance délivrées par des caméras. Ces informations de nature différentes sont agrégées par le module 40 pour obtenir un état instantané.

L'état instantané est stocké dans la base de données d'historique 22.

Le module 40 est propre à comparer l'état instantané avec un état précédent de manière à déterminer des changements dans l'état instantané du trafic, notamment des variations du niveau de charge. Une telle information de changement d'état est ensuite comparée à des informations similaires stockées dans la base de données d'historique 22 de manière à identifier des évènements caractéristiques précurseurs d'une situation de surcharge du trafic.

Les évènements caractéristiques identifiés sont transmis en temps réel au module de supervision globale 20.

En fonction du type d'évènement caractéristique reçu, le module 20 est alors propre à mettre en oeuvre des contremesures permettant d'éviter la saturation et les phénomènes d'avalanche.

Ces contremesures consistent à déployer, au cas par cas, de nouvelles règles d'exploitation sur l'un ou l'autre des modules 60. Une fois encore ces règles sont prédéfinies dans la base de données des règles d'exploitation 24.

Ces nouvelles règles d'exploitation exécutées par les différents modules de supervision locaux 60 permettent de préserver au mieux la capacité de transport du réseau, pour éviter la survenue de congestions risquant de dégrader les performances globales de celui-ci.

Ce mode de fonctionnement est destiné à traiter les dysfonctionnements tels que des retards récurrents ou des goulets d'étranglement du trafic identifiés au sein du réseau multimodal.

Dans un troisième mode de fonctionnement ou mode dégradé, le module de supervision globale 20 supervise le réseau multimodal lorsqu'une partie de celui-ci est indisponible, par exemple en cas d'incident passager ou d'infrastructure indisponible.

Lorsque le module 40 a identifié un évènement caractéristique indicatif d'une défaillance, un fichier de situation est transmis au module 50. De même, un module 60 peut remonter au module 20 une perturbation majeure.

La base de données 52 comporte différents scénarios prédéfinis de reconfiguration du réseau multimodal. Chaque scénario est associé à un fichier de situation et un fichier de situation est associé à une pluralité de scénarios de reconfiguration possibles. Par exemple, en cas de détection d'une surcharge sur une ligne au niveau d'une station, le scénario peut consister à éviter l'utilisation du moyen de transport correspondant pendant une durée déterminée, à retenir les véhicules de la ligne concernée dans les stations amont, ou encore à mettre en service des véhicules sur une ligne de délestage.

Le module 50 est alors propre à analyser l'impact de la mise en oeuvre de chacun des scénarios associés au fichier de situation dans la gestion de la défaillance détectée. Un algorithme de prospective est par exemple exécuté sur chacun de ces scénarios pour déterminer le meilleur d'entre eux, compte tenu de paramètres d'exploitation pertinents, tels que par exemple la réduction du temps de reconfiguration du réseau multimodal ou le retour à un trafic normal ou encore la resynchronisation des différentes stations de correspondance du réseau multimodal.

Le scénario conduisant à une maximisation de la capacité du réseau multimodal est sélectionné comme le meilleur scénario possible. Le module 50 permet donc d'anticiper l'effet de la mise en oeuvre d'un scénario sur l'état du trafic. Le module 50 constitue une aide à la décision pour l'opérateur. Le scénario permettant d'offrir la meilleure réponse à la défaillance en termes d'état du trafic est choisi par l'opérateur et transmis au module de supervision globale 20.

Plus exactement, chaque scénario étant associé à une pluralité de règles d'exploitation dans la base 52, les règles d'exploitation associées au meilleur scénario sont transmises, par le module 20, à chacun des modules 60 de manière à ce qu'ils les mettent en oeuvre pour conduire à une reconfiguration effective de l'exploitation du réseau multimodal, par exemple en rendant inutilisable une section d'une ligne d'un réseau monomodal, en redéfinissant les missions et par conséquent les tables horaires des véhicules circulant sur ce réseau monomodal ou les réseaux monomodaux voisins, ou encore en mettant en service des lignes de contournement et des véhicules de remplacement.

Bien évidemment, suivant les besoins, des modes complémentaires peuvent être définis.

## Revendications

1. Infrastructure de supervision (10) d'un réseau de transport multimodal terrestre, le réseau multimodal regroupant une pluralité de réseaux monomodaux, chaque réseau monomodal étant équipé d'un système d'exploitation (64) individuel, l'infrastructure de supervision (10) comporte une pluralité de modules de supervision locale (60), chaque module de supervision locale (60) étant associé à une station de correspondance assurant une interconnexion entre au moins deux desdits réseaux monomodaux et étant propre à effectuer une synthèse, en temps réel, du trafic au niveau de la station de correspondance associée, **caractérisée en ce que** chaque module de supervision locale (60) est également propre à exécuter, en temps continu, une pluralité de règles d'exploitation en utilisant des données d'exploitation de la synthèse du trafic de manière à générer au moins une consigne, et à transmettre ladite consigne à au moins un système d'exploitation (64) d'un réseau monomodal parmi les réseaux monomodaux interconnectés à la station de correspondance associée.

2. Infrastructure de supervision (10) selon la revendication 1, comportant un module de supervision globale (20) propre à transmettre à chacun des modules de supervision locale (60), la pluralité de règles d'exploitation que ledit module de supervision locale doit exécuter.

3. Infrastructure de supervision (10) selon la revendication 2, dans laquelle le module de supervision globale (20) détermine la pluralité de règles d'exploitation que doit exécuter chacun des modules de supervision locale (60) en fonction d'un profil d'exploitation du réseau multimodal, un profil correspondant à la mise en oeuvre d'une priorité d'exploitation du réseau multimodal.

4. Infrastructure de supervision (10) selon la revendication 3, dans laquelle la priorité d'exploitation est choisie parmi :
Une priorité donnée au temps de trajet des usagers à travers le réseau multimodal ;
Une priorité donnée au flux de passagers sur le réseau multimodal ;
Une priorité donnée à la consommation énergétique des véhicules circulant sur le réseau multimodal ; et,
D'autres priorités élaborées par l'exploitant du réseau de transport multimodal.

5. Infrastructure de supervision (10) selon l'une quelconque des revendications 1 à 4, comportant un module de gestion de données opérationnelles (40) propre à agréger des informations de manière à déterminer un état courant du trafic sur le réseau multimodal et à comparer l'état courant avec un état précédent de manière à identifier un évènement caractéristique indicatif de la survenue d'une surcharge sur le réseau multimodal, le module de supervision globale (20) étant propre, en fonction dudit évènement caractéristique identifié, à déployer, sur les différents modules de supervision locale (60), des règles d'exploitation constituant des contremesures permettant d'éviter la survenue de ladite surcharge.

6. Infrastructure de supervision (10) selon l'une quelconque des revendications 1 à 5, comportant une base de données de scénarios (52) associant à une défaillance sur le réseau multimodal, une pluralité de scénarios d'exploitation du réseau multimodal, et pour chaque scénario un ensemble de règles d'exploitation, et un module de gestion de crise (50) propre, lors de la survenue d'une défaillance particulière, à déterminer un impact attendu de chaque scénario associé à ladite défaillance sur l'état du trafic, de manière à aider un opérateur à choisir un meilleur scénario parmi les différents scénarios possibles, le module de supervision globale (20) transmettant les règles d'exploitation associées au meilleur scénario vers chacun des modules de supervision locale (60).

7. Infrastructure de supervision (10) selon l'une quelconque des revendications 1 à 6, dans laquelle une règle d'exploitation consiste à retenir en station un second véhicule tant qu'un premier véhicule n'est pas arrivé en station, à condition que le temps de rétention du second véhicule ne dépasse pas une marge prédéterminée.

8. Infrastructure de supervision (10) selon l'une quelconque des revendications 1 à 7, dans laquelle dans laquelle une règle d'exploitation consiste à agir sur le temps de déplacement d'un véhicule entre stations et/ou sur la mission d'un ou plusieurs véhicules afin de maintenir la meilleure qualité de service possible.

9. Infrastructure de supervision (10) selon l'une quelconque des revendications 2 à 6, dans laquelle le module de supervision globale (20) fonctionne dans un mode sélectionné parmi un mode de fonctionnement nominal, un mode de fonctionnement en surcharge, pour éviter la survenue d'une surcharge en un point du réseau multimodal, et un mode de fonctionnement dégradé, pour tenir compte d'une défaillance sur le réseau multimodal.
